Europäisches Patentamt

European Patent Office

Office européen des brevets

(19)

(11) Veröffentlichungsnummer: **0 045 843**
**B1**

(12) **EUROPÄISCHE PATENTSCHRIFT**

(45) Veröffentlichungstag der Patentschrift:
09.04.86

(51) Int. Cl.⁴: **F 02 G 5/00**, F 02 G 5/02

(21) Anmeldenummer: 81105020.2

(22) Anmeldetag: 29.06.81

(54) Verfahren zur Nutzung der Abwärmeenergie einer Verbrennungskraftmaschine.

(30) Priorität: 09.08.80 DE 3030232

(43) Veröffentlichungstag der Anmeldung:
17.02.82 Patentblatt 82/7

(45) Bekanntmachung des Hinweises auf die Patenterteilung:
09.04.86 Patentblatt 86/15

(84) Benannte Vertragsstaaten:
AT CH DE FR GB IT LI

(56) Entgegenhaltungen:
DE - A - 2 531 156
DE - A - 2 531 244
DE - A - 2 618 584
DE - A - 2 705 131
DE - B - 1 194 967
DE - C - 683 637
FR - A - 2 424 411
GB - A - 2 021 874
US - A - 3 961 199

SCHIFF & HAFEN, Band 32, Nr. 4, April 1980, Hamburg,
"Gewinnung elektrischer Energie aus der Abgaswärme
von Dieselmotoren", Seiten 71-72

(73) Patentinhaber: M.A.N. MASCHINENFABRIK
AUGSBURG-NÜRNBERG Aktiengesellschaft, Dachauer
Strasse 667 Postfach 50 06 20, D-8000 München 50 (DE)
Patentinhaber: Siemens Aktiengesellschaft, Berlin und
München Wittelsbacherplatz 2, D-8000 München 2 (DE)

(72) Erfinder: Kreissl, Ottmar, Dipl.-Ing.,
Hans-Kudlich-Strasse 40, D-8047 Karlsfeld (DE)
Erfinder: Schurrer, Josef, Ing. (grad.), Josefstrasse 2a,
D-8024 Deisenhofen (DE)
Erfinder: Mötz, Karl, Ing. (grad.), Wöhlerstrasse 29,
D-8000 München 60 (DE)
Erfinder: Rosenberg, Heinz, Dipl.-Ing., Ölzeltgasse 15,
A-1238 Wien (AT)
Erfinder: Leitgeb, Wilhelm, Dr. techn.,
Martin-Luth.-Strasse 26, D-8740 Bad Neustadt (DE)

(74) Vertreter: Walter, Helmut, Aubingerstrasse 81,
D-8000 München 60 (DE)

Beschreibung

Die Erfindung bezieht sich auf ein Verfahren zur Nutzung der Abwärmeenergie einer Verbrennungskraftmaschine, bei dem eine thermodynamische Expansionsmaschine, deren durch Abwärme der Verbrennungskraftmaschine aufgeheiztes Arbeitsmedium von den Abgasen der Verbrennungskraftmaschine stofflich getrennt ist, einen Generator zur Stromerzeugung antreibt.

Ein solches Verfahren ist durch die DE—A—26 18 584 bekannt. Bei diesem Verfahren wird mit Hilfe der Abwärme der Verbrennungskraftmaschine Dampf erzeugt, der in einer mit einem Generator gekuppelten Dampfturbine bzw. Dampfmaschine entspannt wird. Wieterhin wird bei dem bekannten Verfahren vorgeschlagen, die Dampfmaschine auch auf die Welle der Verbrennungskraftmaschine arbeiten zu lassen. Eine solche Rückkopplung der Dampfmaschine mit der Verbrennungskraftmaschine erfordert in der Regel wegen der unterschiedlichen Drehzahl der beiden Maschinenarten ein Anpassungsgetriebe. Weitere Schwierigkeiten treten auf, wenn die Verbrennungskraftmaschine selbst mit unterschiedlicher Drehzahl betrieben wird, wie dies bei in Fahrzeugen eingebauten Verbrennungsmotoren der Fall ist. Läßt man die Dampfmaschine nur einen Generator antreiben, so bestehen bei einer stationären Anordnung der Verbrennungskraftmaschine keine Schwierigkeiten, die durch den Generator gewonnene elektrische Energie in ein Netz einzuspeisen. Soll dagegen die Abwärme eines fahrbar angeordneten Verbrennungsmotors verwertet werden, so bestehen erhebliche Probleme, die jeweils gewindbare elektrische Energie weiter zu verwenden.

Bei einem relativ niedrigen Leistungsangebot, wie es beispielsweise bei den Fahrzeugverbrennungsmotoren der Fall ist, müssen zur Erzielung eines guten Wirkungsgrades kleine Turbinen mit sehr hoher Drehzahl eingesetzt werden. Da elektrische Maschinen üblicher Ausführung mit bewickeltem Läufer aus Festigkeitsgründen nicht mit solch hohen Drehzahlen, wie sie bei Turbinen relativ kleiner Leistung üblich sind (z.B. 120.000 U/min), betrieben werden könne, ergeben sich Schwierigkeiten im Hinblick auf die Ankopplung eines solchen Generators an so eine Turbine. Man kann den Generator über ein Getriebe, das die Turbinendrehzahl auf eine für den Generator zulässige Drehzahl herabsetzt, mit der Turbine verbinden. Ein derartiges Getriebe efford wegen der hohen Turbinendrehzahl fertigungstechnisch eine sehr hohe Präzision und verursacht zusätzlich mechanische Verluste. Zur Vermeidung diese Aufwandes kann man an eine direkte Kupplung des Generators mit der Turbine denken. Infolge der aus Festigkeitsgründen begrenzten Drehzahl eines mit bewickeltem Läufer ausgeführten Generators ist eine direkte Kupplung nur bei entsprechend reduzierter Turbinendrehzahl möglich. Da aber der Wirkungsgrad einer Turbine bei nennenswerter Verringerung ihrer Umdrehungsgeschwindigkeit unter die optimale Arbeitsdrehzahl steil abfällt, wird die Ausbeute der Abwärmeenergie im gleichen Verhältnis stark herabgesetzt.

Die Nutzung der Abgaswärme von Verbrennungsmaschinen ist aus der DE—A—25 31 244 in der Weise bekannt, daß aus den heißen Abgasen mittels eines thermodynamischen Wandlers ein Gleichstrom erzeugt wird und mit diesem Gleichstrom ein die Verbrennungsmaschine entlastender Gleichstrommotor gespeist wird. Jedoch ist diese Art der Entlastung einer Verbrennungsmaschine nicht für solche Fälle geeignet, in denen ein höherfrequenter Wechselstrom zur Verfügung steht.

Der Erfindung liegt die Aufgabe zugrunde, ein Verfahren zu schaffen, bei dem ohne großen konstruktiven Aufwand eine direkte Kupplung der thermodynamischen Expansionsmaschine mit einem elektrischen Generator ohne Drehzahlreduzierung möglich ist und bei dem ferner die aus der Abwärme gewinnbare elektrische Energie, insbesondere bei einer im Inselbetrieb arbeitenden bzw. fahrbar angeordneten Verbrennungskraftmaschine ebenfalls ohne großen technischen Aufwand immer voll verwendet werden kann.

Die Lösung der gestellten Aufgabe gelingt nach der Erfindung dadurch, daß als Generator eine Synchronmaschine mit unbewickeltem Läufer und mindestens ein dieser nachgeschalteter Stromrichter verwendet und an den bzw. einen dieser Stromrichter mindestens ein die Verbrennungskraftmaschine entlasteter elektrischer Motor angeschlossen wird. Der unbewickelte Läufer der Synchronmaschine ist hinsichtlich seiner mechanischen Festigkeit derart ausbildbar, daß auch bei direkter Kupplung mit der Expansionsmaschine keine Drehzahlreduzierung notwendig ist. Die Expansionsmaschine kann daher mit ihrer optimalen Arbeitsdrehzahl betrieben werden. Der Läufer kann entweder ein sogenannter Außenläufer sein, der anstelle der üblichen Erregerwicklung Dauermagnete trägt, oder er ist als Läufer einer homopolaren Reluktanzmaschine ausgebildet. Eine solche Maschine, deren elektrische oder permanentmagnetische Erregung ebenso wie die Arbeitswicklung im Ständer angeordnet ist, kann einen Läufer erhalten, der nur aus massiveisernen, fallweise mit der Welle vereinigten Formstücken besteht und dadurch den Beanspruchungen extrem hoher Drehzahlen standhält. Mittels des Stromrichters wird die von der Synchronmaschine abgegebene elektrisches Spannung hinsichtlich ihrer Größe und/oder Frequenz an die jeweiligen Erfordernisse des angeschlossenen Motors angepaßt.

Es ist aus der GB—A—20 21 874 eine Verbrennungsmaschine bekannt, die mit einem Abgasturbolader versehen ist, mit dessen Turbine eine zusätzlicher Generator gekuppelt ist, der zur Unterstützung der üblicherweise vorgesehenen Lichtmaschine dient. Der Läufer des Generators kann dabei zwar ein mit Dauermagneten bestückter Läufer sein, jedoch sind die Leistungen solcher, zur Unterstützung der ohnehin vorhandenen Lichtmaschinen dienenden Generatoren sowie deren konstruktive Abmessungen entsprechend klein. Bei der erfindungsgemäßen Ausführung werden demgegenüber jedoch wesentlich größere Generatoren benötigt, um möglichst, die gesamte Abwärmeenergie, also die im Kühlwasser und den Abgasen enthaltene Energie zu nutzen.

Durch das erfindungsgemäße Verfahren ist es daher möglich, die Abwärmeenergie optimal auszubeuten, indem die Turbine in ihrem Bereich höchsten Wirkungsgrades betrieben und die mit der Turbine erzeugte mechanische Energie unter geringstmöglichen Reibungsverlusten an den Stromerzeuger weitergeleitet und in elektrische Energie umgewandelt wird, deren Verwertung durch die Entlastung der Verbrennungskraftmaschine mittels eines oder mehrerer Elektromotoren immer sichergestellt ist.

Aufgrund der hohen Betriebsdrehzahl kann die Synchronmaschine kleiner und leichter ausgeführt werden als eine in ihrer Drehzahl begrenzte Maschine mit bewickeltem Läufer. Ferner bringt der Wegfall eines Getriebes eine weitere Einsparung an Raumbedarf und Gewicht. Dadurch ist das erfindungsgemäße Verfahren gegenüber den bekannten, mit Übersetzungsbetrieben arbeitenden Systemen mit einer wesentlich kleineren und leichteren Anlage durchführbar, was in Verbindung mit der Robustheit einer Synchronmaschine mit unbewickeltem Läufer eine optimale Anpassung an den Kraftfahrzeugeinsatz gewährleistet.

Ein weiterer Vorteil des erfindungsgemäßen Verfahrens ist darin zu sehen, daß unter optimaler Ausnutzung der Turbine eine robuste Verbindung bzw. eine einteilige Welle von Turbine und Generator möglich ist und daß dabei keine zusätzlichen Belastungen der Wellenlager aufgrund einer unter Umständen nicht genau fluchtenden Kupplung der beiden Wellen auftreten können.

Die Synchronismaschine kann, wenn sie als Homopolarmaschine ausgeführt ist, elektrisch erregt und fallweise die Erregung zur Spannungsregelung herangezogen werden. Als Energiequelle für die Erregung kann ein Teil der aus der Abwärme gewonnenen Ekektroenergie benutzt werden.

Die Erregung der Synchronmaschine kann jedoch auch durch Permanentmagnete erfolgen, womit durch den Fortfall der Erregerverluste sowohl der Wirkungsgrad verbessert als auch die Entwärmung der Maschine erleichtert wird.

Soll die erzeugte Elektroenergie für Gleichstromverbraucher genutzt werden, so kann zumindest ein Teil der von der Synchronmaschine abgegebenen Leistung einem als Gleichrichter ausgebildeten Stromrichter zugeführt werden. Zur Anpassung der Gleichspannung an den im Gleichstromkreis erforderlichen Wert wird der Gleichrichter mindestens teilweise steuerbar ausgeführt oder es wird dem Gleichrichter ein Gleichstromsteller nachgeschaltet.

Gemäß einer Weiterbildung der Erfindung ist eine Pufferbatterie vorgesehen, die parallel zu den Verbrauchern im Gleichstromkreis geschaltet ist. Diese Pufferbatterie kann für das Anlassen der Verbrennungskraftmaschine oder zur Versorgung anderweitiger Elektroenergieverbraucher, die bei Stillstand der Verbrennungskraftmaschine zumindest zeitweilig in Betrieb gesetzt werden müssen, dienen. Hierdurch läßt sich beispielsweise bei der Anwendung des erfindungsgemäßen Verfahrens im Kraftfahrzeug die übliche Lichtmaschine ersetzen.

Es besteht aber auch die Möglichkeit, die gesamte jeweils verfügbare Leistung der Synchronmaschine mittels eines Gleichrichters gleichzurichten und zur Speisung eines oder mehrerer die Verbrennungskraftmaschine entlastender Gleichstrommotoren zu verwenden. Der oder die Gleichstrommotoren werden durch Regelung ihrer Erregung und/oder ihrer Klemmenspannung der jeweiligen Drehzahl der Verbrennungskraftmaschine angepaßt.

Gegenüber einem Gleichstrommotor kann auch ein robusterer und billigerer Asynchron- oder Synchronmotor zur mechanischen Entlastung der Verbrennungskraftmaschine eingesetzt werden. Dies ist dadurch möglich, daß die gesamte jeweils verfügbare Leistung der Synchronmaschine über einen Umrichter zur Speisung der betreffenden Wechselstrommotoren verwendet wird. Die der jeweiligen Drehzahl der Verbrennungskraftmaschine entsprechende Betriebsfrequenz des Wechselstrommotors wird durch den Umrichter gewonnen, wobei sowohl ein Zwischenkreis- als auch ein Direktumrichter vorgesehen werden kann. Auch eine Anpassung der dem Wechselstrommotor zugeführten Spannung an seine jeweilige Frequenz bzw. Drehzahl kann mittels des Umrichters erfolgen.

Die Erfindung erstreckt sich ferner auf eine Vorrichtung zur Durchführung des vorstehend beschriebenen Verfahrens, die durch die Merkmale der Ansprüche 14 bis 22 gekennzeichnet ist.

In der Zeichnung ist ein Ausführungsbeispiel gemäß der Erfindung schematisch dargestellt. Es zeigt

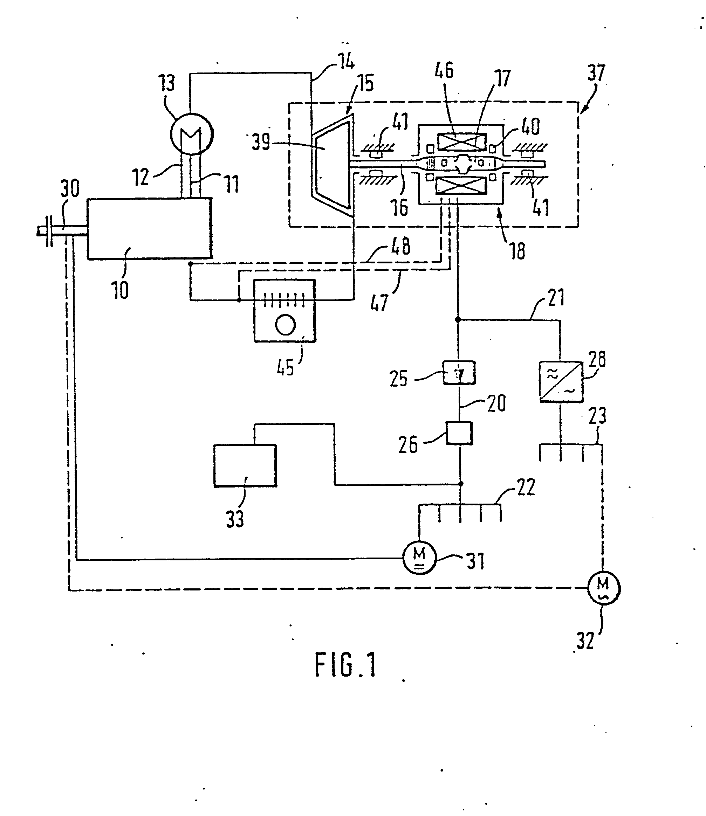

Fig. 1 in schematischer Darstellung eine Vorrichtung zur Durchführung des Verfahrens zur Nutzung der Abwärmeenergie einer Verbrennungskraftmaschine,

Fig. 2 den schematischen Längsschnitt einer sechspoligen Synchronmaschine mit glockenförmig ausgebildetem Außenläufer, an dessen Innenseite schalenförmige Permanentmagnete mit geblechten Polschuhen angeordnet sind, wobei die obere und untere Hälfte des Schnittes verschiedene Ausbildungen der Polschuhe und der Permanentmagnete zeigen,

Fig. 3 einen schematischen Querschnitt der in Fig. 2 dargestellten Maschine.

Das aus einer Verbrennungskraftmaschine 10 herausströmende erhitzte Kühlwasser 11 wird in einem mit den Abgasen 12 der Maschine betriebenen Verdampfer 13 verdampft. Mit dem Dampf 14 wird eine thermodynamische Expansionsmaschine 15 (Turbine) angetrieben, die über eine Welle 16 mit einem unbewickelten Läufer 17 einer als Generator arbeitenden Synchronmaschine 18 verbunden ist, mit der die in dem Kühlmittel 11 und den Abgasen 12 enthaltende Wärmeenergie zum großen Teil in Elektroenergie umgewandelt wird.

Die Generatorleistung wird einem Gleichstromkreis 20 und/oder einem Wechselstromkreis 21 für entsprechende Gleichstromverbraucher 22 bzw. Wechselstromverbraucher 23 zugeführt. Die Gleichrichtung der von der Synchronmaschine 18 erzeugten Wechselspannung erfolgt über einen Gleichrichter 25, dem ein Gleichstromsteller 26 zur Anpassung auf den jeweiligen Bedarfsfall nachgeschaltet ist. Der abgezweigte Wechselstrom 21 wird über einen als Direktumrichter oder Zwischenkreisumrichter ausgebildeten Umrichter 28 an die Wechselstromverbraucher 23 angepaßt.

Als Verbraucher ist ein elektrischer Motor vorgesehen, der die elektrische Energie in mechanische Energie umwandelt, die zur Einsparung der Primärenergie der Antriebswelle 30 der Verbrennungskraftmaschine 10 zugeführt wird. Als Motor kann entweder eine Gleichstrommaschine 31, die an den Gleichstromkreis 20 angeschlossen ist, oder ein als Asynchronmotor oder Synchromotor ausgebildeter Wechselstrommotor 32 verwendet werden.

Um einen gewissen Strombedarf auch bei Betriebsruhe der Verbrennungskraftmaschine 10 decken zu können, ist im Gleichstromkreis 20 parallel zu den Verbrauchern 22 eine Batterie 33 angeschlossen.

Die Expansionsmaschine 15 und die Synchronmaschine 18 sind in einer kompakten Baueinheit 37 zusammengefaßt, wobei für beide Maschinen 15 und 18 eine gemeinsame, einstückige Welle 16 vorgesehen ist, deren eines Ende das Laufrad 39 der Expansionsmaschine 15 trägt und am anderen Ende Den Läufer 17 für die Synchronmaschine 18 bildet. Um die infolge der hohen Drehzahl beachtlichen Luftreibungsverluste des Läufers 17 zu reduzieren, wird im Raum der Ständerbohrung der Synchronmaschine 18 ein Unterdruck erzeugt. Der Unterdruck wird durch an den Enden des Läufers 17 angeordnete Labyrinthdichtungen 40 aufrechterhalten, die gleichzeitig das Eindringen von Partikeln oder Fremdstoffen verhindern. Hierdurch ist eine völlige Freiheit in der Wahl von Lagern 41 für die Welle 16 gegeben. Es besteht also keine Schwierigkeit, hier ölgeschmierte Lager zu verwenden.

Von dem in einem Kondensator 45 kondensierten und weiter abgekühlten Kühlmittel kann ein Teil vorzugsweise abgezweigt werden und zur Kühlung durch den Stator 46 der Synchronmaschine 18 hindurchgeführt und dem Kühlmittel der Verbrennungskraftmaschine 10 wieder beigefügt werden. Der abgezweigte Kreislauf ist mit getrichelten Linien 47 und 48 angedeutet.

Zur Koppelung mit der Expansionsmaschine 15 eignet sich in besonderer Weise eine Homopolarmaschine. Eine solche Maschine kann aufgrund ihrer Läuferausbildung zwar für höchste Drehzahlen ausgelegt werden, ihr Raumbedarf ist jedoch gemäß ihren Wirkungsprinzip größer als der einer Wechselpolmaschine gleicher Leistung und Drehzahl. Ein in besonderer Weise für hohe Drehzahlen geeigneter Synchrongenerator ist dadurch gekennzeichnet, daß dieser eine Wechselpolmaschine mit Außenläufer ist.

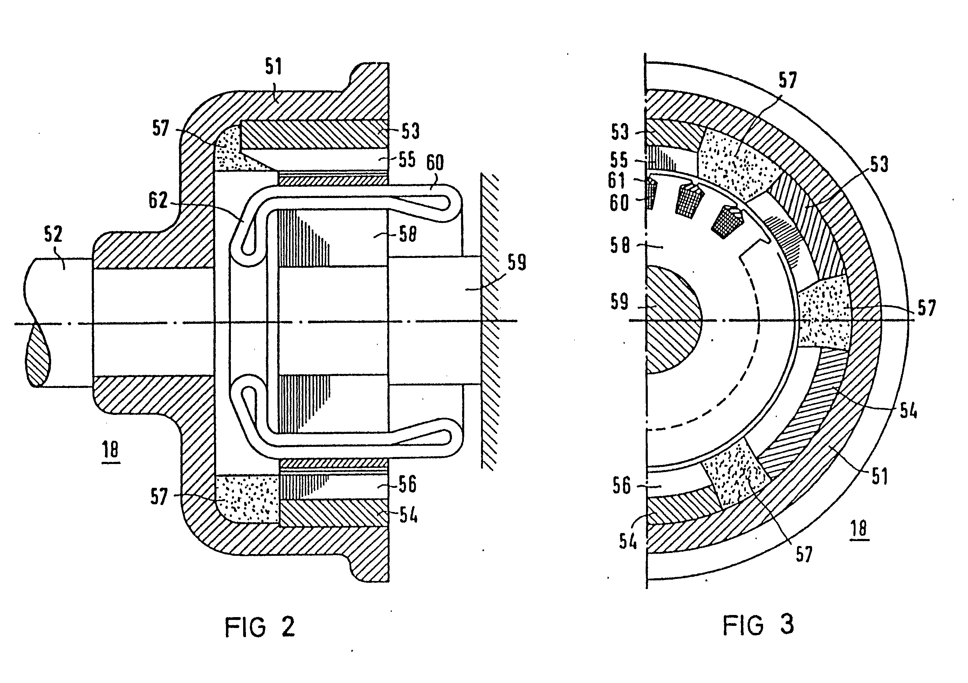

Bei der in Fig. 2 dargestellten Synchronmaschine 18 bildet ein glockenförmiges, eisernes Teil 51 des Läufers das Rückschlußjoch für die Magnetflüsse und ist fliegend auf dem Wellenende 52 einer Expansionsmaschine 15 befestigt. An der Innenseite des Teiles 51 sind die mit wechselnder Polarität radial magnetisierten schalenförmigen Permanentmagnete 53 (obere Hälfte der Schnitte) bzw. 54 (untere Hälfte) mit den zugeordneten geblechten Polschuhen 55 bzw. 56 angeordnet. Die Zwischenräume sind zwecks Verminderung der Luftreibung und zumindest ergänzender-Halterung der Permanentmagnete 53 bzw. 54 und der Polschuhe 55 bzw. 56 mit einer vorzugzweise elastischen Vergußmasse derart ausgefüllt, daß die Innenseite des Läufers einen glatten Hohlzylinder bildet.

Die Fliehkräfte von den Permanentmagneten, den Polschuhen und der Vergußmasse werden vom Teil 51 aufgenommen, was einen Betrieb mit hohen Drehzahlen ermöglicht. Um die dabei auftretende mechanische Beanspruchung sowie Dehnung des Teiles 51 zu vergleichmäßigen, ist seine Wandung an der Öffnung verstärkt.

Der Ständer besteht aus einem Blechpaket 58, das auf einem ruhenden Dorn 59 sitzt und eine Ständerwicklung 60 trägt, die in den Nuten durch Keile 61 verankert ist. Die der Antriebsseite zugewendeten Wicklungsköpfe 62 sind radial nach innen umgebogen, um ihre Ausladung und damit die axiale Länge des Teiles 51 möglichst klein zu halten.

Die Permanentmagnete 53 (obere Hälfte der Schnitte) sind in axialer Richtung länger als das Blechpaket 58. Die zugeordneten achsparallel geblechten Polschuhe 55 bewirken eine Flußkonzentration von den Permanentmagneten zum Blechpaket 58. In der unteren Hälfte der Schnitte sind die Polschuhe 56 achsnormal geblecht und erstrecken sich ebenso wie die entsprechenden Permanentmagnete 54 nur über die Länge des Blechpaketes 58, können jedoch ebenfalls eine Flußkonzentration erzielen. Bei Verwendung metallischer, also elektrisch leitfähiger Magnete werden durch geblechte Polschuhe außerdem die durch die Ständernutung verursachten sogenannten Oberflächenverluste auf einen Bruchteil jenes Wertes vermindert, der sich ohne Polschuhe ergäbe.

Durch die Erfindung wird ein in axialer Richtung besonders gedrängter Aufbau der Vorrichtung erzielt, was bei hohen Drehzahlen sehr vorteilhaft ist. Außerdem ergibt sich eine robuste, betriebssichere und gleichzeitig kostengünstige Ausbildung des Generators.

**Patentansprüche**

1. Verfahren zur Nutzung der Abwärmeenergie einer Verbrennungskraftmaschine, bei dem eine thermodynamische Expansionsmaschine, deren durch Abwärme der Verbrennungskraftmaschine aufgeheiztes Arbeitsmedium von den Abgasen der Verbrennungskraftmaschine stofflich getrennt ist, einen Generator zur Stromerzeugung antreibt, dadurch gekennzeichnet, daß als Generator eine Synchronmaschine (18) mit ungewickeltem Läufer (17) und mindestens ein dieser nachgeschalteter Stromrichter (25 bis 28) verwendet und an den bzw. einen dieser Stromrichter mindestens ein die Verbrennungskraftmaschine entlastender elektrischer Motor (31 bzw. 32) angeschlossen wird.

2. Verfahren nach Anspruch 1, dadurch gekennzeichnet, daß als Synchronmaschine (18) eine Homopolarmaschine verwendet wird.

3. Verfahren nach Anspruch 1 oder 2, dadurch gekennzeichnet, daß die Synchronmaschine (18) elektrisch erregt wird.

4. Verfahren nach Anspruch 3, dadurch gekennzeichnet, daß die Erregung der Synchronmaschine (18) zur Spannungsregelung herangezogen wird.

5. Verfahren nach Anspruch 1 oder 2, dadurch gekennzeichnet, daß die Synchronmaschine (18) permanentmagnetisch erregt wird.

6. Verfahren nach einem der vorhergehenden Ansprüche, dadurch gekennzeichnet, daß zumindest ein Teil der von der Synchronmaschine (18) abgegebenen Leistung einem als Gleichrichter (25) ausgebildeten Stromrichter zugeführt wird.

7. Verfahren nach Anspruch 6, dadurch gekennzeichnet, daß zur Anpassung der Gleichspannung an den im Gleichstromkreis (20) erforderlichen Wert der Gleichrichter mindestens teilweise steuerbar ausgeführt wird.

8. Verfahren nach Anspruch 6, dadurch gekennzeichnet, daß ein ungesteuerter Gleichrichter vorgesehen ist und die Anpassung der Gleichspannung an den im Gleichstromkreis (20) erforderlichen Wert durch einen Gleichstromsteller (26) erfolgt.

9. Verfahren nach einem der Ansprüche 6 bis 8, dadurch gekennzeichnet, daß eine parallel zu den Verbrauchern (22) im Gleichstromkreis (20) geschaltete Batterie (33) eine Leistungspufferung bewirkt.

10. Verfahren nach einem der Ansprüche 1 bis 5, dadurch gekennzeichnet, daß die gesamte jeweils verfügbare Leistung der Synchronmaschine (18) mittels eines Gleichrichters (25) gleichgerichtet und zur Speisung eines oder mehrerer die Verbrennungskraftmaschine entlastender Gleichstrommotoren (31) verwendet wird.

11. Verfahren nach einem der Ansprüche 1 bis 5, dadurch gekennzeichnet, daß die gesamte jeweils verfügbare Leistung der Synchronmaschine (18) über einen Umrichter (28) zur Speisung eines oder mehrerer die Verbrennungskraftmaschine (10) entlastender Wechselstrommotoren verwendet wird.

12. Verfahren nach einem der vorhergehenden Ansprüche, dadurch gekennzeichnet, daß die Synchronmaschine (18) für eine bezüglich des Stromrichters (25 bzw. 28) und/oder den Betrieb der elektrischen Motoren (31 und 32) günstige Spannung ausgelegt wird.

13. Verfahren nach Anspruch 1, dadurch gekennzeichnet, daß eine Anpassung der dem Wechselstrommotor (32) zugeführten Spannung an seinen jeweiligen Betriebszustand im Umrichter (28) erfolgt.

14. Vorrichtung zur Durchführung des Verfahrens gemäß Anspruch 1, bestehend aus einer thermodynamischen Expansionsmaschine, deren durch die Abwärme der Verbrennungskraftmaschine aufgeheiztes Arbeitsmedium von den Abgasen der Verbrennungskraftmaschine stofflich getrennt ist und einem mit der Expansionsmaschine gekoppelten Generator, dadurch gekennzeichnet, daß als Generator eine Synchronmaschine (18) mit unbewickeltem Läufer (17) und mindestens ein dieser nachgeschalteter Stromrichter (25 bzw. 28) vorgesehen und an den bzw. einen dieser Stromrichter (25 bzw. 28) mindestens ein die Verbrennungskraftmaschine entlastender elektrischer Motor (31 bzw. 32) angeschlossen ist.

15. Vorrichtung nach Anspruch 14, dadurch gekennzeichnet, daß die Expansionsmaschine (15) und die Synchronmaschine (18) eine gemeinsame Welle (38) haben.

16. Vorrichtung nach Anspruch 14 oder 15, dadurch gekennzeichnet, daß der Läufer (17) der Synchronmaschine (18) unter Unterdruck läuft.

17. Vorrichtung nach Anspruch 16, dadurch gekennzeichnet, daß die Synchronmaschine (18) an den Läuferenden mit Labyrinthdichtungen (40) abgedichtet ist.

18. Vorrichtung nach einem der Ansprüche 14 bis 17, dadurch gekennzeichnet, daß zur Kühlung des Ständers (46) der Synchronmaschine (18) ein mit dem Kühlmittelkreislauf der Verbrennungskraftmaschine verbundener Kühlmittelkreislauf (47, 48) vorgesehen ist.

19. Vorrichtung nach einem der Ansprüche 14 bis 18, dadurch gekennzeichnet, daß der Synchrongenerator (18) eine permanentmagneterregte Wechselpolmaschine mit Außenläufer ist.

20. Vorrichtung nach Anspruch 19, dadurch gekennzeichnet, daß der Läufer des Synchrongenerators (18) glockenförmig ausgebildet und an einem Wellenende (52) der Expansionsmaschine fliegend angeordnet ist.

21. Vorrichtung nach Anspruch 19 oder 20, dadurch gekennzeichnet, daß die Permanentmagnete (53 bzw. 54) des Läufers mit vorzugsweise geblechten Polschuhen (55 bzw. 56) versehen sind.

22. Vorrichtung nach einem der Ansprüche 19 bis 21, dadurch gekennzeichnet, daß die Wicklungsköpfe (62) der Ständerwicklung (60) zumindest auf der Antriebsseite radial nach innen umgebogen sind.

**Revendications**

1. Procédé pour l'utilisation de l'énergie de la chaleur perdue d'un moteur à combustion, dans lequel une machine thermodynamique à détente, dont le fluide de travail réchauffé par la chaleur perdue du moteur à combustion est matériellement séparé des gaz d'achappement du moteur à combustion, entraîne une génératrice de production de courant électrique, caractérisé en ce qu'on utilise en tant que génératrice une machine synchrone (18) à rotor (17) sans enroulement et au moins un convertisseur (25 à 28) branché en aval de cette machine et en ce qu'au moins un moteur électrique (31; 32) qui décharge le moteur à combustion est raccordé à ce convertisseur ou à ces convertisseurs.

2. Procédé selon la revendication 1, caractérisé en ce qu'on utilise une machine homopolaire en tant que machine synchrone (18).

3. Procédé selon la revendication 1 ou la revendication 2, caractérisé en ce que la machine synchrone (18) est excitée par voie électrique.

4. Procédé selon la revendication 3, caractérisé en ce que l'excitation de la machine synchrone (18) est utilisée pour la régulation de la tension.

5. Procédé selon la revendication 1 ou la revendication 2, caractérisé en ce que la machine synchrone (18) est excitée par aimants permanents.

6. Procédé selon l'une des revendications précédentes, caractérisé en ce qu'au moins une partie de la puissance fournie par la machine synchrone (18) est envoyée à un convertisseur agencé en tant que redresseur (25).

7. Procédé selon la revendication 6, caractérisé en ce que pour adapter la tension continue à la valeur requise dans le circuit à courant continu (20), le redresseur est agencé pour être commandé, au moins partiellement.

8. Procédé selon la revendication 6, caractérisé en ce qu'il est prévu un redresseur non commandé et en ce que l'adaptation de la tension continue à la valeur requise dans le circuit à courant continu est effecutée par un régulateur de courant continu (26).

9. Procédé selon l'une des revendications 6 à 8, caractérisé en ce qu'une batterie (33) branchée en parallèle sur les récepteurs (22) du circuit à courant continu (20) assure un effet tampon sur la puissance.

10. Procédé selon l'une des revendications 1 à 5, caractérisé en ce que toute la puissance disponible de la machine synchrone (18) est redressée au moyen d'un redresseur (25) et est utilisée pour l'alimentation d'un ou plusieurs moteurs à courant continu (31) déchargeant le moteur à combustion (10).

11. Procédé selon l'une des revendications 1 à 5, caractérisé en ce que toute la puissance disponible de la machine synchrone (18) est utilisée par l'intermédiaire d'un convertisseur (28) pour l'alimentation d'un ou plusieurs moteurs à courant alternatif déchargeant le moteur à combustion (10).

12. Procédé selon l'une des revendications précédentes, caractérisé en ce que la machine synchrone (18) est conçue pour une tension favorable en ce qui concerne le convertisseur (25; 28) et/ou le fonctionnement des moteurs électriques (31 et 32).

13. Procédé selon la revendication 1, caractérisé en ce que l'on réalise dans le convertisseur (28) une adaptation de la tension envoyée au moteur à courant alternatif (32) à son état de fonctionnement respectif.

14. Installation pour la mise en oeuvre du procédé selon la revendication 1, constituée d'une machine thermodynamique à détente, dont le fluide de travail réchauffé par la chaleur perdue du moteur à combustion est matériellement séparé des gaz d'achappement du moteur à combustion et d'une génératrice accouplée avec la machine à détente, caractérisée en ce qu'il est prévu en tant que génératrice une machine synchrone (18) à rotor sans enroulement et au moins un convertisseur (25 à 28) branché en aval de cette machine et en ce qu'au moins un moteur électrique (31; 32) qui décharge le moteur à combustion est raccordé à ce convertisseur ou à ces convertisseurs (25; 28).

15. Installation selon la revendication 15, caractérisée en ce que la machine à détente (15) et la machine synchrone (18) ont un arbre commun (38).

16. Installation selon la revendication 14 ou la revendication 15, caractérisée en ce que le rotor (17) de la machine synchrone (18) tourne sous dépression.

17. Installation selon la revendication 16, caractérisée en ce que la machine synchrone (18) est rendue étanche aux extrémités du rotor par des joints d'étanchéité à labyrinthe (40).

18. Installation selon l'une des revendications 14 à 17, caractérisée en ce que pour le refroidissement du stator (46) de la machine synchrone (18), il est prévu un circuit de fluid de refroidissement (47, 48) relié au circuit de fluide de refroidissement du moteur à combustion.

19. Installation selon l'une des revendications 14 à 18, caractérisée en ce que la génératrice synchrone (18) est une machine héteropolaire excitée par aimants permanents avec rotor extérieur.

20. Installation selon la revendication 19, caractérisée en ce que le rotor de la génératrice synchrone (18) est réalisé en forme de cloche et est disposé en porte-à faux sur une extrémité (52) de l'arbre de la machine à détente.

21. Installation selon la revendication 19 ou 20, caractérisée en ce que les aimants permanents (53; 54) du rotor sont munis d'épanouissements polaires (55; 56) de préférence feuilletés en tôle.

22. Installation selon l'une des revendications 19 à 21, caractérisée en ce que les têtes d'enroulements (62) du bobinage de stator (60) sont cintrées radialement vers l'intérieur, au moins du côté de l'entraînement.

**Claims**

1. A method of using the exhaust heat of an internal combustion engine wherein a thermodynamic expansion machine whose working medium is heated by the engine exhaust heat and is physically separate from the engine exhaust gases drives an electricity generator, characterised in that a synchronous machine (18) having an unwound rotor (17) and delivering its output to at least one converting means (25—28) is used as generator and at least one electric motor (31, 32 respectively) adapted to relieve the load on the engine is connected to the converting means or to one of the converting means.

2. A method according to claim 1, characterised in that a homopolar machine is used as synchronous machine (18).

3. A method according to claim 1 or 2, characterised in that the synchronous machine (18) is excited electrically.

4. A method according to claim 3, characterised in that the excitation of the synchronous machine (18) is used for voltage control.

5. A method according to claim 1 or 2, characterised in that the synchronous machine (18) is excited by permanent magnets.

6. A method according to any of the previous claims, characterised in that at least some of the power output by the synchronous machine (18) is supplied to a converter means in the form of a rectifier (25).

7. A method according to claim 6, characterised in that for adaptation of the d.c. voltage to the value necessary in the d.c. circuit (20) the rectifier is controllable at least to some extent.

8. A method according to claim 6, characterised in that an uncontrolled rectifier is provided and a d.c. chopper converter (26) is operative to adapt the d.c. voltage to the value required in the d.c. circuit (20).

9. A method according to any of claims 6—8, characterised in that a battery (13) in parallel with the loads (22) in the d.c. circuit (20) is operative as a power booster.

10. A method according to any of claims 1 to 5, characterised in that the entire available output of the synchronous machine (18) is rectified by a rectifier (25) and used to supply one or more d.c. motors (31) adapted to relieve the load on the engine.

11. A method according to any of claims 1—5, characterised in that the entire available power of the synchronous machine (18) is used, with the interposition of a frequency changer (28), to supply one or more a.c. motors adapted to relieve the load on the engine (10).

12. A method according to any of the previous claims, characterised in that the synchronous machine (18) is designed for a voltage suitable for the converter means (25, 28 respectively) and/or the operation of the electric motors (31 and 32).

13. A method according to claim 1, characterised in that the voltage supplied to the a.c. motor (32) is adapted to the operating state thereof in the frequency changer (28).

14. An apparatus for the practice of the method according to claim 1 comprising: a thermodynamic expansion machine whose working medium is heated by the engine exhaust heat and is physically separate from the engine exhaust gases; and a generator coupled with such machine, characterised in that a synchronous machine (18) having an unwound rotor (17) and delivering its output to at least one converting means (25—28) is provided as generator and at least one electric motor (31, 32 respectively) adapted to relieve the load on the engine is connected to the converting means (25, 28 respectively) or to one of the converting means (25, 28 respectively).

15. An apparatus according to claim 14, characterised in that the expansion machine (15) and the synchronous machine (18) have a common shaft (38).

16. An apparatus according to claim 14 or 15, characterised in that the rotor (17) of the synchronous machine (18) runs in a negative pressure.

17. An apparatus according to claim 16, characterised in that the synchronous machine (18) is sealed by labyrinth seals (40) at the rotor ends.

18. An apparatus according to any of claims 14—17, characterised in that a coolant circuit (47, 48) connected to the coolant circuit of the engine is provided to cool the stator (46) of the synchronous machine (18).

19. An apparatus according to any of claims 14—18, characterised in that the synchronous generator (18) is a permanent-magnet-excited heteropolar machine having an external rotor.

20. An apparatus according to claim 19, characterised in that the rotor of the synchronous generator (18) is dome-shaped and is disposed in overhung fashion at one shaft end (52) of the expansion machine.

21. An apparatus according to claim 19 or 20, characterised in that the permanent magnets (53, 54) of the rotor have preferably laminated pole shoes (55, 56 respectively).

22. An apparatus according to any of claims 19—21, characterised in that the winding ends (62) of the stator winding (60) are bent radially inwards at least on the drive side.

FIG.1

FIG 3

FIG 2